# EUROPEAN PATENT SPECIFICATION

(11) **EP 4 485 579 B1**
(45) Date of publication and mention of the grant of the patent: **21.10.2026**
(21) Application number: 23913049.5
(22) Date of filing: 13.12.2023
(51) Int. Cl.: H01M 4/62, H01M 4/131, H01M 10/052, H01M 4/02, H01M 4/525, H01M 10/0562

(54) **POSITIVE ELECTRODE FOR ALL-SOLID-STATE BATTERY**
POSITIVELEKTRODE FÜR FESTKÖRPERBATTERIE
ÉLECTRODE POSITIVE POUR UNE BATTERIE TOUT SOLIDE

(30) Priority: 27.12.2022 KR 20220185956; 21.07.2023 KR 20230095018
(43) Date of publication of application: 01.01.2025
(73) Proprietor: LG Energy Solution, Ltd., Seoul 07335 (KR)
(72) Inventor: LEE, Choonghyeon, Daejeon 34122 (KR); KIM, Taegon, Daejeon 34122 (KR); KIM, Ki Tae, Daejeon 34122 (KR); KIM, Myeongsoo, Daejeon 34122 (KR)
(74) Representative: Goddar, Heinz J.
(86) International application number: PCT/KR2023/095107
(87) International publication number: WO 2024/144375

(56) References cited:
- EP-A1- 3 993 109
- WO-A1-2022/118928
- JP-A- 2021 101 430
- JP-A- 2021 144 906
- JP-A- 2021 144 906
- KR-A- 20200 129 381
- KR-A- 20210 111 949
- US-A1- 2016 072 120
- US-A1- 2019 214 629
- US-A1- 2019 237 747

## Description

### [Technical Field]

The present invention relates to a positive electrode for an all-solid-state battery and an all-solid-state battery comprising the same. More particularly, the present invention relates to a positive electrode for an all-solid-state battery and an all-solid-state battery comprising the same, in which the properties of composition related to carbon-based conductive material are adjusted.

### [Background Technologies]

Various batteries are being researched to overcome the limitations of current lithium secondary batteries in terms of capacity, safety, power output, enlargement, and miniaturization.

For example, metal-air batteries, which have a very large theoretical capacity compared to lithium secondary batteries; all-solid-state batteries, which have no explosion risk; supercapacitors in terms of power output; NaS batteries or redox flow batteries (RFBs) in terms of enlargement; and thin film batteries in terms of miniaturization, are being continuously researched in academia and industry.

The all-solid-state battery refers to a battery in which a liquid electrolyte used in conventional lithium secondary batteries is replaced by a solid one, and since no flammable solvent is used in the battery, there is no possibility of ignition or explosion due to the decomposition reaction of the conventional electrolyte, which can greatly improve safety. In addition, since Li metal or Li alloy can be used as a negative electrode material, it has the advantage of dramatically improving the energy density per mass and volume of the battery.

In particular, among the solid electrolyte types for all-solid-state batteries, inorganic solid electrolytes can be categorized into sulfide-based and oxide-based. Currently, sulfide-based solid electrolytes are the most technologically advanced solid electrolytes, and they have the advantages of high ionic conductivity and a wide temperature coverage compared to other solid electrolytes. Unlike conventional lithium secondary batteries, as all-solid-state batteries containing a sulfide-based solid electrolyte do not conduct Li ions by a liquid electrolyte, when fabricating a positive electrode, a small-diameter sulfide-based solid electrolyte must be added inside the positive electrode to increase the contact interface between the positive-electrode active material and the electrolyte to increase the conductivity of Li ions. In addition, a conductive material must be added to conduct electrons between the active material and the electrolyte and other battery elements in the positive electrode, but degradation of the sulfide-based solid electrolyte may occur due to excessive electron transfer during charge and discharge.

Accordingly, the present inventors identified property factors of carbon-based conductive materials that can be used for all-solid-state batteries, especially for a positive electrode of inorganic all-solid-state batteries, and studied how to improve the performance of all-solid-state batteries centered on carbon-based conductive materials, and completed the present invention.

### [Prior Art Reference]

### [Patent Document]

(Patent Document 1) Korean Laid-Open Publication No. 10-2022-0028933
(Patent Document 2) Japanese patent application publication JP2021101430A.

Patent Document 2 discloses an active material layer/positive electrode for an all-solid-state lithium secondary battery comprising a positive electrode active material, a solid electrolyte, preferably sulfide-based, e.g. LPS, and a carbon-based conductive aid containing fibrous carbon. The fibrous carbon has a defined diameter, effective fibre length, specific surface area and XRD/crystallinity properties, and aims to maintain electronic/ionic pathways during cycling. Examples use NCM, LPS, and fibrous carbon CNF with BET around 9-10 m²/g and fibre lengths around 80-90 µm.

### [Detailed Description of the Invention]

### [Technical Problems]

To improve the performance of a positive electrode for an all-solid-state battery, a positive electrode for all-solid-state batteries with adjusted properties of a composition related to carbon-based conductive material is provided, along with an all-solid-state battery comprising the positive electrode.

### [Technical Solutions]

According to a first aspect of the present invention, the present invention provides a positive electrode for an all-solid-state battery, as defined in claim 1. Preferred embodiments are defined in the dependent claims.

### [Advantageous Effects]

In fabricating a positive electrode for an all-solid-state battery, performance of a positive electrode for an all-solid-state battery can be improved by adjusting properties of a composition of a carbon-based conductive material within a certain range. Specifically, a fibrous carbon-based conductive material with certain properties can improve the initial discharge efficiency of an all-solid-state battery when mixed with a positive-electrode active material in an appropriate ratio, as well as improving the capacity retention rate at high rate discharges above 0.5C.

### [Brief Description of Drawings]

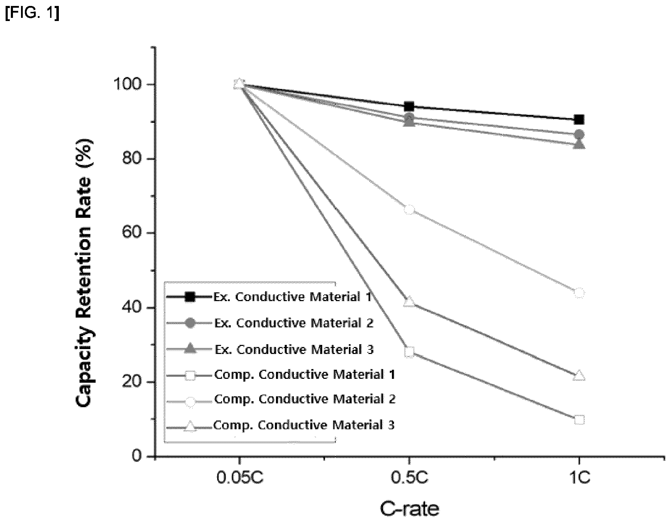

FIG. 1 is a graph depicting the capacity retention results of the first through third charge/discharge tests according to experimental examples.

### [Best Mode for Practicing the Invention]

All of the embodiments provided by the present invention can be achieved by the following description. It should be understood that the following description describes a preferred embodiment of the present invention and is not necessarily limited to the present invention.

For any property described in this disclosure, if the measurement conditions and methods are not specifically stated, the property shall be measured in accordance with the measurement conditions and methods commonly used by one of ordinary skill in the art.

An aspect of the present invention provides a positive electrode for an all-solid-state battery comprising a positive-electrode active material, a conductive material, and an inorganic solid electrolyte. According to an embodiment of the present invention, the positive electrode for an all-solid-state battery further comprises a binder. The conductive material is a carbon-based conductive material having carbon as a major component, which is commonly used as a component of conductive materials in the relevant technical field. Even if there is no specific reference to the material of the conductive material in this specification, it shall be interpreted as a carbon-based conductive material. The positive electrode can improve the performance of an all-solid-state battery, particularly the initial discharge efficiency and the capacity retention rate at high rate discharge, by using a fibrous conductive material with certain properties mixed with a positive-electrode active material in an appropriate ratio.

In a positive electrode according to an embodiment of the present invention, the conductive material includes a fibrous conductive material. In the present disclosure, "fibrous conductive material" means a conductive material with a length-to-diameter ratio of 5 or more for a cylindrical shape.

According to an embodiment of the present invention, the fibrous conductive material has a length from 5 µm to 20 µm. When the length of the fibrous conductive material is adjusted within the aforementioned range, it may be advantageous for improving the performance of the all-solid-state battery by forming an appropriate conductive networking between the active materials.

According to an embodiment of the present invention, the fibrous conductive material has a diameter from 50 nm to 500 nm. The diameter is measured concerning the circular cross-section of the fibrous conductive material. Specifically, the diameter of the fibrous conductive material may be 50 nm or more, 60 nm or more, 70 nm or more, 80 nm or more, 90 nm or more, or 100 nm or more, and may be 500 nm or less or 470 nm or less, 440 nm or less, 410 nm or less, 380 nm or less, or 350 nm or less, and may be from 50 nm to 500 nm, 70 nm to 410 nm, or 100 nm to 350 nm. When the diameter of the fibrous conductive material is adjusted within the aforementioned range, it may be advantageous to improve the performance of the all-solid-state battery by securing a sufficient amount of active material while allowing the conductive material to be appropriately disposed therebetween.

According to an embodiment of the present invention, the fibrous conductive material has an aspect ratio of 20 or more. The aspect ratio is defined as the value obtained by dividing the length of the cylindrical shape in the fibrous conductive material by the diameter of the circle. Specifically, the aspect ratio of the fibrous conductive material may be 20 or more, 22 or more, 24 or more, 26 or more, 28 or more, 30 or more, 32 or more, 34 or more, 36 or more, 38 or more, or 40 or more. If the fibrous conductive material can be effectively disposed between the active materials, the upper limit of the aspect ratio of the fibrous conductive material is not particularly limited. For example, the aspect ratio of the fibrous conductive material may be 100 or less. When the aspect ratio of the fibrous conductive material is adjusted within the aforementioned range, it may be advantageous to improve the performance of the all-solid-state battery, such as by facilitating effective arrangement the conductive material between the active materials.

According to an embodiment of the present invention, the conductive material has a BET specific surface area from 1 m²/g to 20 m²/g. The BET specific surface area is a specific surface area measured by the BET method and can be calculated, for example, from the amount of mass gas adsorption at a liquid nitrogen temperature (77 K) using the BELSORP-mini II of BEL Japan. Specifically, the BET specific surface area of the conductive material may be 1 m²/g or more, 2 m²/g or more, 3 m²/g or more, 4 m²/g or more, or 5 m²/g or more, and may be 20 m²/g or less, 19 m²/g or less, 18 m²/g or less, 17 m²/g or less, 16 m²/g or less, or 15 m²/g or less, and may be from 1 m²/g to 20 m²/g, 3 m²/g to 17 m²/g, 5 m²/g to 15 m²/g. When the BET specific surface area of the conductive material is adjusted within the aforementioned range, it may be advantageous for improving the performance of the all-solid-state battery by the effect that the conductive material efficiently contacts the active material relative to the input amount.

According to an embodiment of the present invention, the conductive material has a powder resistivity of 0.025 ohm·cm or less under a pressure of 196 MPa. The conductivity of the conductive material can be measured as the powder resistivity of the conductive material powder, and the powder resistivity can be measured using a powder resistivity meter equipped with a 4-pin probe while adjusting the pressure applied to the powder. For example, the powder resistivity may be measured by placing a certain amount of conductive material in the powder resistivity meter and continuously applying a force, and measuring the density measured as the particles are pressed, and measuring the powder resistivity with the 4-pin probe. The conductive material according to an embodiment of the present invention may have a decrease in powder resistivity as the pellet density increases, which means that the conductivity of the conductive material particles themselves improve as the degree of compression becomes stronger. Specifically, the powder resistivity of the conductive material may be 0.025 ohm·cm or less, 0.024 ohm·cm or less, 0.023 ohm·cm or less, 0.022 ohm·cm or less, 0.021 ohm·cm or less, 0.02 ohm·cm or less under a pressure of 196 MPa. The conductive material according to the present invention has low powder resistivity and excellent conductivity.

According to an embodiment of the present invention, the conductive material has a density of from 1 g/cm³ to 5 g/cm³. The density refers to the true density of the conductive material, which can be measured according to general methods known in the art. For example, the density may be measured using an AccuPycll-1340 instrument from Micromeritics. Specifically, the density of the conductive material may be 1 g/cm³ or more, 1.5 g/cm³ or more, or 2 g/cm³ or more, and may be 5 g/cm³ or less, 4.5 g/cm³ or less, 4 g/cm³ or less, 3.5 g/cm³ or less, 3 g/cm³ or less, or 2.5 g/cm³ or less, and may be from 1 g/cm³ to 5 g/cm³, 1.5 g/cm³ to 4 g/cm³, or 2 g/cm³ to 2.5 g/cm³. When the density of the conductive material is adjusted within the aforementioned range, it may be advantageous for improving the performance of the all-solid-state battery due to effects such as improving the functionality of the conductive material.

By confirming various properties related to the electrode material, the positive electrode for the all-solid-state battery can be advantageously adjusted for performance improvement. Accordingly, an embodiment of the present invention defines a new parameter A with respect to the properties of the conductive material. The A value is determined by the following Equation 1. [Equation 1] $A = specific surface area \times length \times density$

Here, the specific surface area is the BET specific surface area of the conductive material (m²/g), the length is the length of the conductive material (µm), and the density is the density of the conductive material (g/cm³). The length refers to the length of the conductive material, but in the case of a spherical shape, such as a particulate conductive material, it may refer to the diameter of the sphere. The factors determining the above A value, i.e., specific surface area, length, and density, are numerical values in accordance with the units described above, and therefore, the units of the A value are not specifically converted. According to an embodiment of the present invention, the conductive material has an A value from 100 to 500. Specifically, the A value of the conductive material may be 100 or more, 110 or more, 120 or more, 130 or more, 140 or more, or 150 or more, and may be 500 or less, 470 or less, 440 or less, 410 or less, 380 or less, or 350 or less, and may be from 100 to 500, 130 to 410, or 150 to 350. The A value of the conductive material may be one criterion by which the conductive material can realize functionality at the positive electrode of an all-solid-state battery. In the case of linear conductive materials, such as the commonly known carbon nanofibers, the long fibers of the conductive material interfaces with the active material and electrolyte particles in the fiber direction, and in the case of point-like conductive materials, such as carbon black, each particle interfaces with the active material and electrolyte. In these cases, the A value is a variable representing a shape of the conductive material, and means a shape that includes a hollow structure on a surface of the conductive material. According to Equation 1 above, when the conductive material used is linear, the longer the fiber length and the higher the density, the higher the A value. The longer the length of a single fiber, the smaller the contact between the conductive material fibers or particles, and the more difficult it is for them to aggregate, increasing the dispersion of the conductive material in the positive electrode. When the A value of the conductive material is adjusted within the aforementioned range, the conductive material can realize sufficient functionality in the positive electrode, which can be advantageous for improving the performance of the all-solid-state battery.

According to an embodiment of the present invention, the carbon-based conductive material has a difference from 0.3 to 0.7 between the I_{D} /I_{G} values before and after graphitization in a Raman spectral analysis. The method of graphitization and measurement of the I_{D} /I_{G} value follows general methods known in the art, and more particularly according to the method described in the following embodiment. The difference between the above I_{D} /I_{G} values is expressed as the higher of the I_{D} /I_{G} values before and after graphitization minus the lower value. Specifically, the difference between the I_{D} /I_{G} values before and after graphitization of the carbon-based conductive material may be 0.3 or more, 0.35 or more, 0.4 or more, or 0.45 or more, and may be 0.7 or less, 0.65 or less, 0.6 or less, 0.55 or less, or 0.5 or less, and may be from 0.3 to 0.7, 0.35 to 0.65, 0.4 to 0.6. The carbon-based conductive material undergoes a certain level of crystalline changes through graphitization, so that graphitized conductive materials can well complement positive electrode materials and electrolytes.

According to an embodiment of the present invention, the carbon-based conductive material has a difference from 10 to 50 between the degree of graphitization (DoG) values before and after graphitization in an XRD analysis. The method of graphitization method and measurement of the graphitization degree of graphitization (DoG) value follows general methods known in the art, and more particularly to the methods described in the following embodiments. The degree of graphitization (DoG) is an indicator to determine which material the crystalline surface of the sample is close to between the crystalline surface spacing of ideal graphite (3.354 Å) and the crystalline surface spacing of coal (3.440 Å). In the case of amorphous carbon with a wider spacing than the coal crystallite spacing, the DoG value is negative, and the closer it is to 100, the closer it is to fully ordered graphite. The difference in the DoG values represents the subtraction of the lower value from the higher value between the DoG values before and after graphitization. Specifically, the difference between the DoG values of the carbon-based conductive material before and after graphitization may be 10 or more, 15 or more, 20 or more, or 25 or more, and may be 50 or less, 45 or less, 40 or less, 35 or less, or 30 or less, and may be 10 to 50, 15 to 45, or 20 to 40. The carbon-based conductive material undergoes a certain level of crystalline form change through graphitization, allowing it to be well-suited for the positive electrode active material and electrolyte before graphitization.

The positive-electrode active material can be anything that can be used as the positive-electrode active material of a lithium secondary battery. For example, the positive-electrode active material may be a lithium transition metal oxide comprising one or more transition metals. In an embodiment of the present invention, the positive-electrode active material is selected from a group consisting of: LiCoO₂, LiNiO₂, LiMnO₂, Li₂MnO₃, LiMn₂O₄, Li(NiₐCo_{b}Mn_{c})O₂ (0<a<1, 0<b<1, 0<c<1, a+b+c=1), LiNi_{1-y}Co_{y}O₂ (0<y<1), LiCo_{1-y}Mn_{y}O₂ (0<y<1), LiNi_{1-y}Mn_{y}O₂ (0<y<1), Li(NiₐCo_{b}Mn_{c})O₄ (0<a<2, 0<b<2, 0<c<2, a+b+c=2), LiMn_{2-z}Ni_{z}O₄ (0<z<2), and LiMn_{2-z}CO_{z}O₄ (0<z<2), and combinations thereof.

The binder binds the electrode components, such as the positive-electrode active material and the conductive material, and helps the electrode to have a stable internal structure. The solid electrolyte primarily used in one specific example of the present invention is a sulfide-based solid electrolyte, which is sensitive to moisture and tends to generate H₂S gas upon contact with moisture. Therefore, it is desirable to minimize moisture during electrode manufacturing. According to an embodiment of the present invention, the binder is an organic binder. The organic binder refers to a binder that is soluble or dispersible in an organic solvent, particularly N-methylpyrrolidone (NMP), and is distinguished from an aqueous binder which has water as the solvent or dispersant. Specifically, organic binders may be selected from a group consisting of: polyvinylidene fluoride (PVDF), polyvinylidene fluoride-hexafluoropropylene copolymer (PVDF-co-HFP), polyvinyl alcohol, starch, hydroxypropyl cellulose, regenerated cellulose, polyvinylpyrrolidone, polyimide, polyamideimide, polyethylene, polypropylene, ethylene-propylene-diene monomer (EPDM), sulfonated EPDM, styrene butadiene rubber, and fluorinated rubber, although not limited thereto.

When a dry method is used to combine electrode components such as positive-electrode active material and conductive material with a binder, a fiberizing binder may be used. The fiberizing binder extensively connects the components in the electrode in the form of fibers within the electrode structure, such that the basic structure of the electrode is maintained by the positive-electrode active material, the conductive material, and the binder alone. The fiberizing binder is not particularly limited as long as it is one commonly used in the relevant technical field and, for example, the fiberizing binder may be polytetrafluoroethylene (PTFE). The fiberizing binder may be used combined with the organic binders described above.

In the all-solid-state battery, the solid electrolyte is not particularly limited as long as it is a solid electrolyte commonly used in the relevant technical field. According to an embodiment of the present invention, the solid electrolyte in the all-solid-state battery comprises an inorganic solid electrolyte, in which the inorganic solid electrolyte is a sulfide-based solid electrolyte, a halide-based solid electrolyte, an oxide-based solid electrolyte, or a combination thereof.

The sulfide-based solid electrolyte includes sulfur atoms among the electrolyte components, but is not limited to any particular component, and may include one or more of crystalline solid electrolytes, amorphous solid electrolytes (glassy solid electrolytes), and glass-ceramic solid electrolytes. Specific examples of the sulfide-based solid electrolyte include LPS-type sulfides containing sulfur and phosphorus, LPSCI-type sulfides (e.g., Li₆PS₅Cl), Li₄₋ₓGe₁₋ₓPₓS₄ (x is from 0.1 to 2, more specifically, x is 3/4, 2/3), Li_{10±1}MP₂X₁₂ (M=Ge, Si, Sn, Al, X=S, Se), Li_{3.833}Sn_{0.833}As_{0.166}S₄, Li₄SnS₄, Li_{3.25}Ge_{0.25}P_{0.75}S₄, Li₂S-P₂S₅, B₂S₃-Li₂S, xLi₂S-(100-x)P₂S₅ (x is from 70 to 80), Li₂S-LiI-P₂S₅, Li₂S-LiI-Li₂O-P₂S₅, Li₂S-LiBr-P₂S₅, Li₂S-LiCl-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂, Li₂S-GeS₂-ZnS, Li₂S-SiS₂-Li₃N, Li₂S-SiS₂-LiI, Li₂S-B₂S₃-LiI, etc. although not limited thereto.

The halide-based solid electrolyte may include at least one of Li₃YCl₆ and Li₃YBr₆, although not limited thereto.

The oxide-based solid electrolyte may be suitably selected and used from LLT-based with a perovskite structure such as Li₃ₓLa_{2/3-x}TiO₃, LISICON such as Li₁₄Zn(GeO₄)₄, LATP-based such as Li_{1.3}Al_{0.3}Ti_{1.7}(PO₄)₃, LAGP-based such as (Li₁₊ₓGe₂₋ₓAlₓ(PO₄)₃), and phosphate-based such as LiPON, although not limited thereto.

The positive-electrode active material, conductive material, binder, and inorganic solid electrolyte composing the positive electrode for the all-solid-state battery may be introduced into the positive electrode in various ways and forms. It is possible to manufacture the positive electrode by mixing the positive-electrode active material, conductive material, binder, and inorganic solid electrolyte together, or initially forming the structure of the all-solid-state battery with the positive-electrode active material, conductive material, and binder, and then injecting and immobilizing the inorganic solid electrolyte.

The positive-electrode active material, conductive material and binder may also be granulated to first form the structure of an all-solid-state battery. The granules may be fabricated by methods commonly used in the relevant technical field, without limitation. For example, the granules may be fabricated by preparing a slurry and then spray drying. The active material, which is a particulate in a powder state, is introduced together with a binder and a conductive material to grow the granules to a certain size. According to an embodiment of the present invention, the granules are spherical particles comprising a positive-electrode active material, a binder and a solid electrolyte. Spherical does not mean fully spherical in the strict sense of the word, but is generally used as an umbrella concept to include particles with a rounded shape.

According to an embodiment of the present invention, the granules are spherical particles having a diameter of from 30 µm to 150 µm. Here, a spherical particle does not mean a perfectly spherical particle, and thus the diameter means the largest value of the distance from a point on any surface of the particle to a point on another surface. Specifically, the diameter of the granules may be 30 µm or more, 35 µm or more, 40 µm or more, 45 µm or more, or 50 µm or more, and may be 150 µm or less, 145 µm or less, 140 µm or less, 135 µm or less, 130 µm or less, 125 µm or less, or 120 µm or less, and may be 30 µm to 150 µm, 40 µm to 135 µm, or 50 µm to 120 µm. When the size of the granules is adjusted within the above range, an appropriate level of pores to accommodate the solid electrolyte can be secured when the active material layer is formed.

The positive-electrode active material, conductive material and binder are introduced into the positive electrode by adjusting the mixing ratio to a level at which the functionality of the conductive material and binder can be sufficiently controlled while including as much of the positive-electrode active material as possible to secure the capacity of the electrode. According to an embodiment of the present invention, the positive electrode includes 83 parts by weight to 99.8 parts by weight of the positive-electrode active material, 0.1 parts by weight to 10 parts by weight of the binder, and 0.01 parts by weight to 10 parts by weight of the conductive material, based on a total weight of 100 parts of the positive-electrode active material, binder, and conductive material. Specifically, the content of the positive-electrode active material may be 83 parts by weight or more, 84 parts by weight or more, 85 parts by weight or more, 86 parts by weight or more, 87 parts by weight or more, 88 parts by weight or more, 89 parts by weight or more, or 90 parts by weight or more, and may be 99.9 parts by weight or less, 99.8 parts by weight or less, 99.7 parts by weight or less, 99.6 parts by weight or less, 99.5 parts by weight or less, 99.4 parts by weight or less, or 99.3 parts by weight or less, based on a total weight of 100 parts of the positive-electrode active material, binder, and conductive material. The content of the binder is 0.1 parts by weight or more, 0.2 parts by weight or more, 0.3 parts by weight or more, 0.4 parts by weight or more, or 0.5 parts by weight or more, and is 10 parts by weight or less, 9.5 parts by weight or less, 9 parts by weight or less, 8.5 parts by weight or less, 8 parts by weight or less, or 7.5 parts by weight or less, based on a total weight of 100 parts by weight of the positive-electrode active material, binder, and conductive material. The content of the conductive material is 0.01 parts by weight or more, 0.05 parts by weight or more, 0.1 parts by weight or more, 0.2 parts by weight or more, 0.3 parts by weight or more, 0.4 parts by weight or more, or 0.5 parts by weight or more, and is 10 parts by weight or less, 9.5 parts by weight or less, 9 parts by weight or less, 8.5 parts by weight or less, 8 parts by weight or less, or 7.5 parts by weight or less, based on a total weight of 100 parts of the positive-electrode active material, binder, and conductive material. The content of the positive-electrode active material, binder, and conductive material may be advantageous for improving the performance of the battery when adjusted within the aforementioned range.

In a positive electrode for an all-solid-state battery, the performance of the all-solid-state battery can be improved by adjusting the properties of the conductive material in consideration of the ratio of the conductive material to the positive-electrode active material. Accordingly, an embodiment of the present invention defines a new parameter B with respect to the conductive material and the positive-electrode active material. The value of B is determined by the following Equation 2. [Equation 2] $B = R \times A$

Here, R is a value obtained by dividing the weight of the conductive material by the weight of the positive-electrode active material based on the positive-electrode, and A is a value calculated by Equation 1 mentioned above. Since the R value is the ratio of the equal unit weight of the conductive material and the positive-electrode active material, it has no units, and the A value, as described above, is also a numerical value without unit conversion. Accordingly, the B value also has no special unit. According to an embodiment of the present invention, the conductive material has a B value from 5 to 50. Specifically, the B value of the conductive material may be 5 or more, 6 or more, 7 or more, 8 or more, 9 or more, or 10 or more, and may be 50 or less, 46 or less, 42 or less, 38 or less, 34 or less, or 30 or less, and may be from 5 to 50, 8 to 38, or 10 to 30. The B value of the conductive material contributes to improving the performance of the all-solid-state battery by providing a criterion for appropriately endowing conductivity to the positive-electrode active material, which plays an important role in the performance such as the capacity of the all-solid-state battery. When the B value of the conductive material is adjusted within the aforementioned range, the conductive material may realize sufficient functionality in the positive electrode, which may be advantageous for improving the performance of the all-solid-state battery.

The positive-electrode active material, conductive material, binder, and inorganic solid electrolyte described above may be stacked on the collector to form a sheet-like positive-electrode active material layer. In the case of forming a positive-electrode active material layer on the collector, the positive electrode includes the collector and the positive-electrode active material layer. The collector is in contact with the positive-electrode active material layer over a larger area to effectively transfer electrons to the positive-electrode active material layer. The collector represents an electrically conductive material such as a metal plate, and depending on the polarity of the battery, electrodes known in the relevant technical field may be used as appropriate.

An aspect of the present invention provides an all-solid-state battery comprising a positive electrode for the all-solid-state battery. In constructing the above all-solid-state battery, a separate solid electrolyte layer may be introduced between the positive electrode and the negative electrode, and such a solid electrolyte layer may serve as a separator in a conventional lithium secondary battery. The batteries described above may in some cases be utilized as semi-solid batteries with a liquid electrolyte, in which a separate polymer separator may be required.

The polymer separator is interposed between the negative electrode and the positive electrode, and serves to electrically isolate the negative electrode and the positive electrode while allowing lithium ions to pass through. The polymeric separator may be any polymeric separator used in the conventional all-solid-state battery field, and is not particularly limited thereto.

The negative electrode corresponding to the positive electrode comprises a negative-electrode active material. The negative-electrode active material can be any material that can be used as a negative-electrode active material of a lithium ion secondary battery. For example, the negative-electrode active material may be one or more selected from carbon such as hard carbon, graphitized carbon, or the like; metal complex oxides such as LiₓFe₂O₃ (0≤x≤1), LiₓWO₂(0≤x≤1), SnₓMe₁₋ₓMe'_{y}O_{z} (Me:Mn,Fe,Pb,Ge; Me': Al, B, P, Si, group 1, 2, 3 elements, halogens; 0<x≤1; 1≤y≤3; 1≤z≤8); lithium metals; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅ and the like; conductive polymers such as polyacetylene; Li-Co-Ni based materials; titanium oxide; lithium titanium oxide and the like.

The negative electrode may be fabricated in the form of an anodeless battery in which no lithium is initially present. The anodeless battery does not contain lithium metal or lithium alloy, which can be a source of lithium for the negative-electrode active material, when the battery is first assembled. However, lithium may be precipitated inside the negative electrode during charging, allowing subsequent charging and discharging to occur. Therefore, the anodeless battery can have the negative-electrode active material located outside of the negative electrode. The initial layer of the negative-electrode active material does not contain lithium, and a carbon-based material, which allows the movement of lithium ions internally, can be used.

Depending on the type of negative-electrode active material, the negative electrode may include a conductive material and a binder, and the conductive material and binder used in the negative electrode may be any material that can be used as a conductive material and binder for a negative electrode of a lithium secondary battery in the relevant technical field. Specifically, it may be selected within the range of conductive materials and binders used in the positive electrode described above.

Configurations of the above all-solid-state battery that are not specifically disclosed in this disclosure are in accordance with methods commonly used in the relevant technical field.

An aspect of the present invention provides a battery module including the all-solid-state battery as a unit battery, a battery pack including the battery module, and a device including the battery pack as a power source.

Specific examples of such devices include, but are not limited to, a power tool powered by an electric motor; an electric vehicle, including an electric vehicle (EV), a hybrid electric vehicle (HEV), a plug-in hybrid electric vehicle (PHEV), and the like; an electric two-wheeler, including an electric bicycle (E-bike) and an electric scooter; an electric golf cart; and a power storage system.

Hereinafter, preferred embodiments are presented to facilitate the understanding of the present invention, but the following embodiments are provided only to facilitate the understanding of the present invention and are not limited to the present invention.

### Examples (Composite Positive Electrode for an All-Solid-State Battery)

### Example 1

A powder was fabricated by mixing LiNi_{0.8}Co_{0.1}Mn_{0.1}O₂ (NCM 811) as the active material, a sulfide-based solid electrolyte (LPSCI) as the electrolyte, a fibrous carbon-based exemplary conductive material 1 as the conductive material, in a weight ratio of 60:35:5. After weighing 1.2g of the positive electrode material and 0.7g of sulfide-based solid electrolyte in powder form, they were mixed using a agate mortar in a dry room environment for 15 minutes. Then 0.1 g of exemplary conductive material 1 was weighed and added to the above mixture and mixed for another 15 minutes to fabricate a composite positive electrode in the form of a mixed powder.

### Example 2

The composite positive electrode was fabricated in the same manner as in Example 1, except that exemplary conductive material 2, a fibrous carbon-based conductive material, was used as the conductive material.

### Example 3

The composite positive electrode was fabricated in the same manner as in Example 1, except that exemplary conductive material 3, a fibrous carbon-based conductive material, was used as the conductive material.

### Comparative Example 1

The composite positive electrode was fabricated in the same manner as in Example 1, except that comparative conductive material 1, a particulate carbon-based conductive material, was used as the conductive material.

### Comparative Example 2

The composite positive electrode was fabricated in the same manner as in Example 1, except that comparative conductive material 2, a particulate carbon-based conductive material, was used as the conductive material.

### Comparative Example 3

The composite positive electrode was fabricated in the same manner as in Example 1, except that comparative conductive material 3, a particulate carbon-based conductive material, was used as the conductive material.

The exemplary and comparative conductive materials have the properties shown in Table 1 below.

**[Table 1]**

| | Exemplary conductive material 1 | Exemplary conductive material 2 | Exemplary conductive material 3 | Comparative conductive material 1 | Comparative conductive material 2 | Comparative conductive material 3 |
|---|---|---|---|---|---|---|
| BET Specific Surface Area (m²/g) | 8.9 | 9.5 | 15 | 1300 | 386 | 9 |
| Diameter (µm) | 0.31 | 0.30 | 0.15 | 0.034 | 0.035 | 0.28 |
| Length (µm) | 14 | 16 | 6 | - | - | - |
| Density (g/cm³) | 2.18 | 2.27 | 2 | 0.11 | 0.1 | 0.783 |
| Powder Resistivity (ohm·cm) | 0.006 | 0.0016 | 0.017 | 0.04 | 0.022 | 0.164 |
| A | 271.63 | 345.04 | 180.00 | 4.86 | 1.35 | 1.97 |
| B | 22.64 | 28.75 | 15.00 | 0.41 | 0.11 | 0.16 |

| | | | | | | |
|---|---|---|---|---|---|---|
| * BET specific surface area (m²/g): Measured with a BET specific surface area measuring device (Mfr.: Nippon Bell, product: BEL_SORP_MAX) after degassing at 200°C for 8 hours and undergoing N₂ absorption/desorption at 77K. * Diameter (µm): After fabrication of the fibrous conductive material and particulate conductive material, it is dispersed in an organic solvent, and optical images are taken and a particle image analyzer (Mfr.: Shimadzu, product: iSpect DIA-10) was used for a statistical measurement. The conductive material diameter is the average value after measuring the diameter of more than 100 conductive material fibers/particles in the images. * Length (µm): After fabricating the fibrous conductive material, it is dispersed in an organic solvent, optical images are taken, and statistical measurements are made using a particle image analyzer. The conductive material length is the average value after measuring the diameter of more than 100 conductive material fibers/particles in the image. * Density (g/cm³): Carbon-based conductive materials are measured with a pycnometer capable of measuring the density of a solid sample (Mfr.: Micromeritics, product: AccuPycll-1340). The density is measured by placing a sample of known weight in the sample chamber of the pycnometer and injecting helium or nitrogen gas to calculate the volume occupied by the sample. * Powder resistivity (ohm·cm): The powder resistivity of a solid conductive material sample is measured with a powder resistivity meter (Mfr.: Hantech, product: HPRM-FA2). After attaching a lower punch to the body part of the powder resistor mold, the conductive material measurement sample of known weight is weighed. The upper punch is then attached and placed in the powder resistivity meter. Then the device is operated to pressurize from 0 to 2000 kgf in 400 kgf increments and observe the final resistivity at 2000 kgf (196 MPa). | | | | | | |

Raman spectra and X-ray diffraction (XRD) before and after graphitization were analyzed for the above exemplary conductive materials and comparative conductive materials, and the resulting values are shown in Table 2 below.

**[Table 2]**

| | | Exemplary conductive material 1 | Exemplary conductive material 2 | Exemplary conductive material 3 | Comparative conductive material 1 | Comparative conductive material 2 | Comparative conductive material 3 |
|---|---|---|---|---|---|---|---|
| Raman data | I_{D}/I_{G} before graphitization | 0.79 | 0.08 | 0.16 | 1.22 | 1.07 | 0.93 |
| | I_{D}/I_{G} after graphitization | 0.3 | 0.08 | 0.12 | 0.69 | 0.65 | 0.18 |
| | Change of values before and after (△ I_{D}/I_{G}) | -0.49 | 0 | -0.04 | -0.53 | -0.42 | -0.75 |
| | d(002) before graphitization | 3.429 | 3.364 | 3.39 | 3.629 | 3.51 | 3.575 |
| | d(002) after graphitization | 3.406 | 3.371 | 3.397 | 3.464 | 3.447 | 3.424 |
| XRD Data | DoG before graphitization | 12.5 | 87.9 | 58.6 | -219.8 | -81.5 | -156.5 |
| | DoG after graphitization | 39.5 | 80.2 | 50.2 | -28.2 | -7.8 | 18.6 |
| | Change of values before and after (△DoG) | 27 | -7.7 | -8.4 | 191.6 | 73.7 | 175.1 |

| | | | | | | | |
|---|---|---|---|---|---|---|---|
| * Graphitization: After placing 10g of carbon-based conductive material to be graphitized in a retort box inside the heating chamber of the graphitization furnace for carbon fiber (operating temperature: 2200-2800°C), the temperature is increased to up to 2800°C while injecting argon or nitrogen gas under vacuum conditions, and then cooled for more than 18 hours to obtain graphitized carbon-based conductive material. The rate of temperature increase was gradually reduced in each temperature coverage to prevent overheating and thermal runaway. * I_{D}/I_{G} : Raman spectra were obtained for the surface of the samples with a 532 nm laser using a Raman spectroscopy apparatus (Mfr.: Jasco, product: NRS-2000B), and measured by analyzing the average spectra for 50 points. The value of I_{D}/I_{G} is the ratio of the intensity value of the peak in the absorption region of 1560 to 1580 cm⁻¹ (I_{G} ) to the intensity value of the peak in the absorption region of 1320 to 1350 cm⁻¹ (I_{D} ) obtained by Raman spectroscopy. * △ I_{D}/I_{G} : I_{D}/I_{G} after graphitization - I_{D}/I_{G} before graphitization * Crystal plane d(002): the conductive material sample was attached to a low-background holder made of Si material on the XRD analysis device (Mfr.: Bruker, product: D8 Endeavor). The measurement was conducted in the 2theta range of 10-90 with a 0.014-degree interval, using FDS 0.3 deg, anti-scatter 3mm, and 0.3 seconds exposure. The d(002) of the conductive material was calculated using the Bragg formula by obtaining the graph of 2theta values measured by XRD, and integrating the peak position on the graph through numerical methods as defined by Equation 3. [Equation 3] $d \left(002\right) = λ / 2 sinθ$ * Degree of Graphitization (DoG): An indicator of which material the crystal plane of the sample is closer to, the crystal plane spacing of ideal graphite (3.354 Å) and coal (3.440 Å). The DoG value is calculated by Equation 4 below. [Equation 4] $DoG = \left(3.440-d\left(002\right)\right) / \left(3.440-3.354\right) \times 100$ * △DoG: DoG after graphitization - DoG before graphitization | | | | | | | |

### Experimental Example (Evaluation of Performance of Composite Positive Electrodes)

Using a pressure jig having a certain diameter, the mixed powder obtained in each of the embodiments and the comparative examples was pressurized and fabricated into a pellet form. The pellet was transferred to a pressure jig cell, and 200 mg of sulfide-based solid electrolyte powder was added to the pellet, and then pressurized with a force of 400 MPa for 60 seconds to form an electrolyte film. The Li metal negative electrode was then placed against the pellet and pressurized again at 100MPa for 10 seconds to increase the electrolyte film-negative electrode contact. The rate characteristics were then observed in the charge/discharge tester after clamping the pressure jig cell.

To illustrate, charge/discharge was performed on an all-solid-state battery including each positive electrode fabricated in the examples and comparative examples, and the charge capacity (mAh/g), discharge capacity (mAh/g), and capacity retention (%) in the first cycle were measured and shown in Table 3 below. For the battery performance evaluation, the battery was subjected to the following charging/discharging conditions at a temperature of 60°C and terminated in a discharged state (with no lithium on the negative electrode) (first charge/discharge test).
Charge conditions: 0.05C, 4.25V CC/CV, 0.01C cut-off
Discharge conditions: 0.05C, 3V CC

After the end of the first charge/discharge test, a second charge/discharge test was performed to measure the capacity retention rate (%) by charging under the same conditions as the first charge/discharge test, but the discharge was performed under the condition of 0.5C and 3V CC. In addition, after the second charge/discharge test, the third charge/discharge test was performed under the same conditions as the first charge/discharge test, but the discharge was performed under the condition of 1C, 3V CC to measure the capacity retention rate (%). The results of the second and third charge/discharge tests are shown in Table 3 and FIG. 1 below.

**[Table 3]**

| | | Exemplary conductive material 1 | Exemplary conductive material 2 | Exemplary conductive material 3 | Comparative conductive material 1 | Comparative conductive material 2 | Comparative conductive material 3 |
|---|---|---|---|---|---|---|---|
| First Charge/Discharge Test | Initial charge capacity (mAh/g) | 250.44 | 228.26 | 239.78 | 263.98 | 258.44 | 218.74 |
| | Initial discharge capacity (mAh/g) | 234.01 | 209.31 | 220.28 | 209.49 | 210.12 | 186.7 |
| | Capacity retention (%) | 93.43 | 91.68 | 91.87 | 79.36 | 81.31 | 85.35 |
| Second Charge/Discharge Test | Capacity retention (%) | 94.06 | 91.12 | 89.72 | 28.03 | 66.38 | 41.34 |
| Third Charge/Discharge Test | Capacity retention (%) | 90.47 | 86.51 | 83.72 | 9.91 | 44.02 | 21.54 |

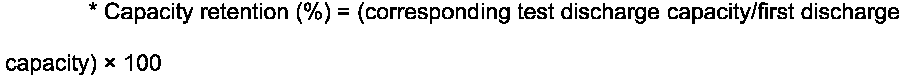

* Capacity retention (%) = (corresponding test discharge capacity/first discharge capacity) × 100

According to Table 3 above, the batteries using exemplary conductive materials 1 to 3, which have certain properties as fibrous carbon-based conductive materials, had better capacity retention than the batteries using comparative conductive materials 1 to 3, which have different properties as particulate carbon-based conductive materials. Furthermore, this difference in capacity retention was greater as the discharge rate increased, such as in the second and third charge/discharge tests. Batteries using exemplary conductive materials 1 to 3 had excellent rate characteristics, with no significant degradation in capacity retention at high rates.

In addition, among the fibrous carbon-based conductive materials, it has been confirmed that if a conductive material with a significant change in I_{D}/I_{G} value or DoG value beyond a certain level due to graphitization is used, superior rate characteristics are achieved, similar to exemplary conductive material 1.

All mere variations or modifications of the present invention fall within the scope of the present invention, and the specific scope of protection of the present invention will be made clear by the appended claims of the patent.

## Claims

1. A positive electrode for an all-solid-state battery, comprising:
a positive-electrode active material,
a carbon-based conductive material, and
an inorganic solid electrolyte,
wherein the carbon-based conductive material is a fibrous carbon-based conductive material having a length from 5 µm to 20 µm
the carbon-based conductive material has a BET specific surface area from 1 m²/g to 20 m²/g,
the carbon-based conductive material has an A value from 100 to 500, wherein the A value is calculated by Equation 1: [Equation 1] $A = specific surface area \times length \times density$
wherein the specific surface area is a BET specific surface area of the conductive material in m²/g, the length is a length of the conductive material in µm, and the density is a density of the conductive material in g/cm³, and the BET specific surface area, length and density are respectively measured as disclosed in the specification;
the carbon-based conductive material has a difference of 0.3 to 0.7 in I_{D} /I_{G} values before and after graphitization in a Raman spectral analysis, and the I_{D} /I_{G} values are measured as disclosed in the specification; and
the positive electrode has a B value from 5 to 50, wherein the B value is calculated by Equation 2 below: [Equation 2] $B = R \times A$
wherein R is a value obtained by dividing the weight of the conductive material by the weight of the positive-electrode active material based on the positive-electrode, and A is a value calculated by Equation 1 mentioned above.

2. The positive electrode for an all-solid-state battery of claim 1, wherein the carbon-based conductive material is a fibrous carbon-based conductive material having a diameter from 50 nm to 500 nm, and the diameter is measured as disclosed in the specification.

3. The positive electrode for an all-solid-state battery of claim 1, wherein a powder resistivity of the carbon-based conductive material is equal to or less than 0.025 ohm·cm under 196 MPa pressure, and the powder resistivity is measured as disclosed in the specification.

4. The positive electrode for an all-solid-state battery of claim 1, wherein the carbon-based conductive material has a density from 1 g/cm³ to 5 g/cm³.

5. The positive electrode for an all-solid-state battery of claim 1, wherein the carbon-based conductive material has a difference of 10 to 50 in degree of graphitization (DoG) values before and after graphitization in an XRD analysis, and the degree of graphitization (DoG) values are measured as disclosed in the specification.

6. The positive-electrode for an all-solid-state battery of claim 1, wherein the positive-electrode active material is selected from a group consisting of LiCoO₂, LiNiO₂, LiMnO₂, Li₃MnO₃, LiMn₂O₄, Li(NiₐCo_{b}Mn_{c})O₂ (0<a<1, 0<b<1, 0<c<1, a+b+c=1), LiNi_{1-y}Co_{y}O₂(0<y<1), LiCo_{1-y}Mn_{y}O_{z} (0<y<1), LiNi_{1-y}Mn_{y}O_{z}(0<y<1), Li(NiₐCo_{b}Mn_{c})O₄ (0<a<2, 0<b<2, 0<c<2, a+b+c=2), LiMn_{2-z}Ni_{z}O₄ (0<z<2), LiMn_{2-z}Co_{z}O₄ (0<z<2), and combinations thereof.

## Patentansprüche

1. Positive Elektrode für eine Festkörperbatterie, umfassend:
ein Positivelektrodenaktivmaterial,
ein leitfähiges Material auf Kohlenstoffbasis, und
einen anorganischen Festelektrolyten,
wobei das leitfähige Material auf Kohlenstoffbasis ein faseriges leitfähiges Material auf Kohlenstoffbasis mit einer Länge von 5 µm bis 20 µm ist,
das leitfähige Material auf Kohlenstoffbasis eine spezifische BET-Oberfläche von 1 m²/g bis 20 m²/g aufweist,
das leitfähige Material auf Kohlenstoffbasis einen A-Wert von 100 bis 500 aufweist, wobei der A-Wert durch Gleichung 1 berechnet wird: [Gleichung 1] $A = spezifische Oberfläche \times Länge \times Dichte ,$
wobei die spezifische Oberfläche eine spezifische BET-Oberfläche des leitfähigen Materials in m²/g ist, die Länge eine Länge des leitfähigen Materials in µm ist und die Dichte eine Dichte des leitfähigen Materials in g/cm³ ist, und die spezifische BET-Oberfläche, die Länge und die Dichte jeweils wie in der Beschreibung offenbart gemessen werden;
das leitfähige Material auf Kohlenstoffbasis eine Differenz von 0,3 bis 0,7 in I_{D}/I_{G}-Werten vor und nach der Graphitisierung in einer Raman-Spektralanalyse aufweist, und die I_{D}/I_{G}-Werte wie in der Beschreibung offenbart gemessen werden; und
die positive Elektrode einen B-Wert von 5 bis 50 aufweist, wobei der B-Wert durch Gleichung 2 unten berechnet wird: [Gleichung 2] $B = R \times A ,$
wobei R ein Wert ist, der durch Dividieren des Gewichts des leitfähigen Materials durch das Gewicht des Positivelektrodenaktivmaterials auf der Basis der positiven Elektrode erhalten wird, und A ein Wert ist, der durch die oben erwähnte Gleichung 1 berechnet wird.

2. Positive Elektrode für eine Festkörperbatterie nach Anspruch 1, wobei das leitfähige Material auf Kohlenstoffbasis ein faseriges leitfähiges Material auf Kohlenstoffbasis mit einem Durchmesser von 50 nm bis 500 nm ist, und der Durchmesser wie in der Beschreibung offenbart gemessen wird.

3. Positive Elektrode für eine Festkörperbatterie nach Anspruch 1, wobei ein spezifischer Pulverwiderstand des leitfähigen Materials auf Kohlenstoffbasis gleich oder kleiner als 0,025 Ohm·cm bei 196 MPa Druck ist, und der spezifische Pulverwiderstand wie in der Beschreibung offenbart gemessen wird.

4. Positive Elektrode für eine Festkörperbatterie nach Anspruch 1, wobei das leitfähige Material auf Kohlenstoffbasis eine Dichte von 1 g/cm³ bis 5 g/cm³ aufweist.

5. Positive Elektrode für eine Festkörperbatterie nach Anspruch 1, wobei das leitfähige Material auf Kohlenstoffbasis eine Differenz von 10 bis 50 in Graphitisierungsgrad(DoG)-Werten vor und nach der Graphitisierung in einer XRD-Analyse aufweist, und die Graphitisierungsgrad(DoG)-Werte wie in der Beschreibung offenbart gemessen werden.

6. Positive Elektrode für eine Festkörperbatterie nach Anspruch 1, wobei das Positivelektrodenaktivmaterial ausgewählt ist aus einer Gruppe bestehend aus LiCoO₂, LiNiO2, LiMnO₂, Li₂MnO₃, LiMn₂O₄, Li(NiₐCobMnc)O₂ (0<a<1, 0<b<1, 0<c<1, a+b+c=1), LiNi_{1-y}CoyO₂ (0<y<1), LiCo_{1-y}Mn_{y}O₂ (0<y<1), LiNi_{1-y}Mn_{y}O₂ (0<y<1), Li(NiₐCo_{b}Mn_{c})O₄ (0<a<2, 0<b<2, 0<c<2, a+b+c=2), LiMn_{2-z}Ni_{z}O₄ (0<z<2), LiMn_{2-z}Co_{z}O₄ (0<z<2), und Kombinationen davon.

## Revendications

1. Électrode positive pour une batterie tout-solide comprenant :
un matériau actif d'électrode positive,
un matériau conducteur à base de carbone, et
un électrolyte solide inorganique,
dans laquelle le matériau conducteur à base de carbone est un matériau conducteur à base de carbone fibreux ayant une longueur de 5 µm à 20 µm
le matériau conducteur à base de carbone a une surface spécifique BET de 1 m²/g à 20 m²/g,
le matériau conducteur à base de carbone a une valeur A de 100 à 500, dans laquelle la valeur A est calculée par l'Équation 1 : [Équation 1] $A = surface spécifique \times longueur \times densité$
dans laquelle la surface spécifique est une surface spécifique BET du matériau conducteur en m²/g, la longueur est une longueur du matériau conducteur en µm, et la densité est une densité du matériau conducteur en g/cm³, et la surface spécifique BET, la longueur et la densité sont mesurées respectivement comme décrit dans la spécification ;
le matériau conducteur à base de carbone a une différence de 0,3 à 0,7 dans des valeurs I_{D} /I_{G} avant et après une graphitisation dans une analyse spectrale de Raman, et les valeurs I_{D} /I_{G} sont mesurées comme décrit dans la spécification ; et
l'électrode positive a une valeur B de 5 à 50, dans laquelle la valeur B est calculée par l'Équation 2 ci-dessous : [Équation 2] $B = R \times A$
dans laquelle R est une valeur obtenue en divisant le poids du matériau conducteur par le poids du matériau actif d'électrode positive sur la base de l'électrode positive, et A est une valeur calculée par l'Équation 1 mentionnée ci-dessus.

2. Électrode positive pour une batterie tout-solide selon la revendication 1, dans laquelle le matériau conducteur à base de carbone est un matériau conducteur à base de carbone fibreux ayant un diamètre de 50 nm à 500 nm, et le diamètre est mesuré comme décrit dans la spécification.

3. Électrode positive pour une batterie tout-solide selon la revendication 1, dans laquelle une résistivité de poudre du matériau conducteur à base de carbone est égale ou inférieure à 0,025 ohm·cm sous une pression de 196 MPa, et la résistivité de poudre est mesurée comme décrit dans la spécification.

4. Électrode positive pour une batterie tout-solide selon la revendication 1, dans laquelle le matériau conducteur à base de carbone a une densité de 1 g/cm³ à 5 g/cm³.

5. Électrode positive pour une batterie tout-solide selon la revendication 1, dans laquelle le matériau conducteur à base de carbone a une différence de 10 à 50 dans les valeurs de degré de graphitisation (DoG) avant et après une graphitisation dans une analyse XRD, et les valeurs de degré de graphitisation (DoG) sont mesurées comme décrit dans la spécification.

6. Électrode positive pour une batterie tout-solide selon la revendication 1, dans laquelle le matériau actif d'électrode positive est sélectionné dans le groupe constitué de LiCoO₂, LiNiO₂, LiMnO₂, Li₂MnO₃, LiMn₂O₄, Li(NiₐCo_{b}Mn_{c})O₂ (0<a<1, 0<b<1, 0<c<1, a+b+c=1), LiNi_{1-y}Co_{y}O₂ (0<y<1), LiCo_{1-y}Mn_{y}O₂ (0<y<1), LiNi_{1-y}Mn_{y}O₂(0<y<1), Li(NiₐCo_{b}Mn_{c})O₄ (0<a<2, 0<b<2, 0<c<2, a+b+c=2), LiMn_{2-z}Ni_{z}O₄ (0<z<2), LiMn_{2-z}Co_{z}O₄ (0<z<2), et des combinaisons de ces derniers.
